(19) Europäisches Patentamt / European Patent Office / Office européen des brevets

(11) **EP 4 610 751 A1**

(12) **EUROPEAN PATENT APPLICATION**

(43) Date of publication:
**03.09.2025 Bulletin 2025/36**

(21) Application number: **25152232.2**

(22) Date of filing: **16.01.2025**

(51) International Patent Classification (IPC):
**G05B 19/401** *(2006.01)* **B23Q 17/22** *(2006.01)*
**G01B 21/04** *(2006.01)* **G05B 19/404** *(2006.01)*

(52) Cooperative Patent Classification (CPC):
**G05B 19/4015; B23Q 17/22; G01B 21/04;**
**G01B 21/042;** G05B 2219/37619;
G05B 2219/50063; G05B 2219/50155;
G05B 2219/50157; G05B 2219/50252;
G05B 2219/50257; G05B 2219/50289;
G05B 2219/50337

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **27.02.2024 JP 2024027147**

(71) Applicants:
• **Star Micronics Co., Ltd.**
  **Shizuoka-shi, Shizuoka 422-8654 (JP)**
• **National University Corporation Tokai National Higher Education and Research System**
  **Nagoya-shi, Aichi 464-8601 (JP)**

(72) Inventors:
• **KATSUOKA, Kentaro**
  **Shizuoka-shi (JP)**
• **SATO, Ryuta**
  **Nagoya-shi, 464-8601 (JP)**
• **NIWA, Mizuki**
  **Nagoya-shi, 464-8601 (JP)**
• **KAWAI, Ryota**
  **Nagoya-shi, 464-8601 (JP)**

(74) Representative: **Lewis Silkin LLP**
**Arbor**
**255 Blackfriars Road**
**London SE1 9AX (GB)**

(54) **METHOD FOR IDENTIFYING GEOMETRIC ERRORS IN MACHINE TOOL**

(57) A method for identifying geometric errors in a machine tool includes the steps of: positioning a reference sphere so as to align its center with a centerline of a tool spindle; attaching a position measuring device having a gauge head to a rotation unit so as to direct the gauge head toward a rotation centerline of the rotation unit; acquiring displacement data relative to the center of the reference sphere by measuring positions of the reference sphere with the gauge head while rotating a rotation target (the swivel unit or the rotation unit) with the gauge head directed toward the center of the reference sphere, the displacement data being dependent on rotation angles of the rotation target; and identifying the geometric errors by least squares method using a mathematical expression having terms containing the geometric errors and representing displacement dependent on the rotation angles, and the displacement data.

Fig. 1

EP 4 610 751 A1

## Description

CROSS-REFERENCES TO RELATED APPLICATIONS

The present application is related to the Japanese Patent Application No. 2024-027147, filed February 27, 2024, the entire disclosure of which is expressly incorporated by reference herein.

FIELD OF THE INVENTION

The present invention relates to a method for identifying geometric errors in a machine tool.

DESCRIPTION OF RELATED ART

As a machine tool, a spindle-moving lathe for machining a workpiece gripped by a spindle with a tool is known. The spindle-moving lathe can perform complex machining using multiple tools while continuously feeding bar stock from the rear of the spindle, and is suitable for mass production of small precision parts and the like. To perform complex machining, the spindle-moving lathe may be equipped with a swivel unit that changes orientation of the tools around a swivel centerline. Since the spindle-moving lathe equipped with the swivel unit has many axes, it is considered that there are many geometric errors between the axes.

Methods have been studied for evaluating geometric errors in large complex machine tools having functions of both NC (Numerical Control) lathes and machining centers until now. In order to evaluate the accuracy of complex machine tools, methods using measuring devices that perform measurements such as the ball bar measurement and the R-test measurement are mainly used, the measurements being specified in ISO (International Organization for Standardization) 10791-6, the measuring devices being configured to measure positional relative relationship between any two points in the machine tool.

Japanese Patent Application Publication No. 2018-142064 shows a method for identifying geometric errors in a 5-axis control turning center consisting of three linear axes controlled along X, Y and Z axes and two rotary axes controlled around B and C axis. This method for identifying geometric errors includes: a step of attaching a reference sphere on the C-axis and attaching a touch probe on the B-axis; a first measurement step of measuring positions of the center of the reference sphere while indexing the B-axis angle at predetermined intervals with the C-axis fixed; a second measurement step of measuring positions of the center of the reference sphere similar to the first measurement step with a different turning radius of the measurement point of the touch probe; a third measurement step of measuring positions of the center of the reference sphere while indexing the C-axis angle at predetermined intervals with the B-axis fixed; and a fourth measurement step of measuring the positions of the center of the reference sphere similar to the third measurement step with a different initial position of the center of the reference sphere in the Z direction.

Since the above-mentioned reference sphere is positioned offset from the rotation center of the C-axis, the reference sphere moves significantly with the rotation of the C-axis.

BRIEF SUMMARY OF THE INVENTION

Since the spindle-moving lathe is intended for small products, its movable range is extremely limited. This makes it impossible to perform evaluation by ball bar measurement or R-test measurement, which is commonly used as the method for evaluating the accuracy of large complex machine tools. Furthermore, no methods have been studied for evaluating the accuracy related to geometric errors in automatic lathes except the ball bar measurement and the R-test measurement until now. Thus, it has not been clarified what geometric errors exist in machine tools having a limited movable range such as spindle-moving lathes. Moreover, it has not been clarified how the above-mentioned geometric errors influence machining accuracy and how the above-mentioned geometric errors are evaluated.

The present invention discloses a method for easily identifying geometric errors between axes in a machine tool having a limited movable range.

One aspect of the present invention provides a method for identifying geometric errors between axes from a workpiece to a tool spindle in a machine tool including a rotation unit, a swivel unit having a tool spindle, and a control unit, the rotation unit being configured to rotate together with the workpiece around a rotation centerline, the swivel unit being configured to swivel around a swivel centerline whose direction is different from that of the tool spindle, the control unit being configured to control motions of a rotation axis around the rotation centerline, a swivel axis around the swivel centerline, and linear axes, the method comprising the steps of:

(a1) positioning a reference sphere having a center so as to align the center with a centerline of the tool spindle;

(a2) attaching a position measuring device having a gauge head to the rotation unit so as to direct the gauge head toward the rotation centerline;

(a3) acquiring displacement data relative to the center of the reference sphere by measuring positions of the reference sphere with the gauge head while rotating a rotation target with the gauge head directed toward the center of the reference sphere, the displacement data being dependent on rotation angles of the rotation target, the rotation target being either the swivel unit or the rotation unit; and

(a4) identifying the geometric errors by least squares method using a mathematical expression and the displacement data, the mathematical expression having terms containing the geometric errors and representing displacement dependent on the rotation angles.

These and other features, aspects, and advantages of the invention will be apparent to those skilled in the art from the following detailed description of preferred non-limiting exemplary embodiments together with the drawings and the claims.

BRIEF DESCRIPTION OF THE DRAWINGS

Fig. 1 is a schematic perspective view showing an example of a spindle-moving lathe.

Fig. 2 is a schematic view showing geometric errors between axes.

Fig. 3 is a schematic view showing an example of attaching a reference sphere and a position measuring device to the spindle-moving lathe.

Fig. 4 is a schematic view showing an example of a tool-side jig.

Fig. 5 is a schematic view showing an example of the position measuring device.

Fig. 6 is a schematic view showing an example where X and Z directional positions of a center of the reference sphere change when a swivel unit rotates -90 degrees.

Fig. 7 is a schematic view showing an example of measuring displacement of the reference sphere with a gauge head while rotating a rotation unit.

Fig. 8 is a schematic view showing an example of performing circular interpolation with Z and X axes and measuring X-directional displacement of the reference sphere with the gauge head, while rotating the swivel unit.

Fig. 9 is a schematic view showing an example of performing circular interpolation with Z and X axes and measuring Y-directional displacement of the reference sphere with the gauge head, while rotating the swivel unit.

Fig. 10 is a schematic diagram showing an example of a procedure for identifying geometric errors from C-axis radial displacement data.

Fig. 11 is a schematic diagram showing an example of a procedure for identifying geometric errors from displacement data during simultaneous control of B, Z and X axes.

Fig. 12 is a schematic diagram showing an example of displacement data during simultaneous control of B, Z and X axes.

DETAILED DESCRIPTION OF THE INVENTION

Some embodiments of the present invention will be described below. Of course, the following embodiments merely exemplify the present invention, and all features shown in the embodiments may not be necessarily essential to the solution.

(1) Outlines of the present disclosure

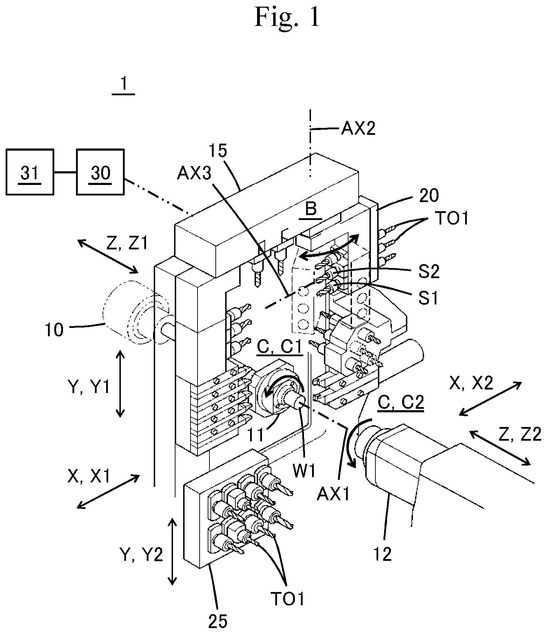

First, outlines of the present disclosure are given referring to examples shown in Figs. 1 to 12. The figures in the present application are schematic examples, magnification ratio in each direction shown in these figures may differ, and the figures may not be consistent. Of course, each element of the present disclosure should not be limited to the specific examples indicated by the reference sighs.

In the present application, the numerical range "Min to Max" refers to the minimum value Min or more and the maximum value Max or less.

(Embodiment 1)

One aspect of a method for identifying geometric errors in a machine tool (e.g. lathe 1) is directed to a machine tool (1) including a rotation unit (e.g. front spindle 10), a swivel unit having a tool spindle (e.g. tool spindle S2), and a control unit 30. The rotation unit (10) is configured to rotate together with a workpiece W1 around a rotation centerline AX1. The swivel unit 20 is configured to swivel around a swivel centerline AX2 whose direction is different from that of the tool spindle (S2). The control unit 30 is configured to control motions of a rotation axis around the rotation centerline AX1, a swivel axis around the swivel centerline AX2, and linear axes. The present method for identifying geometric errors between axes from the workpiece W1 to the tool spindle (S2) includes the following steps:

(a1) A step of positioning a reference sphere 51 so as to align the center 52 of the reference sphere 51 with a centerline of the tool spindle (S2);

(a2) A step of attaching a position measuring device 60 to the rotation unit (10) so as to direct the gauge head 62 of the position measuring device 60 toward the rotation centerline AX1;

(a3) A step of acquiring displacement data relative to the center 52 of the reference sphere 51 by measuring positions of the reference sphere 51 with the gauge head 62 while rotating a rotation target with the gauge head 62 directed toward the center 52 of the reference sphere 51, the displacement data being dependent on rotation angles of the rotation target, the rotation target being either the swivel unit 20 or the rotation unit (10); and

(a4) A step of identifying the geometric errors by least squares method using a mathematical expression and the displacement data, the mathematical expression having terms containing the geometric errors and representing displacement dependent on the rotation angles.

The above mathematical expression can be derived from a mathematical model constructed considering the geometric errors existing between the axes. The aforementioned mathematical expression, as shown in Expressions (6) to (9) described later, has terms containing the geometric errors, and represents the displacement dependent on the rotation angles of the rotation target. By preparing the aforementioned mathematical expression and implementing the steps (a1) to (a4), the geometric errors between the axes can be identified.

First, the reference sphere 51 is positioned so as to align the center 52 with the centerline of the tool spindle (S2), and the position measuring device 60 is attached to the rotation unit (10) so as to direct the gauge head 62 of the position measuring device 60 toward the rotation centerline AX1. The displacement data relative to the center 52 of the reference sphere 51 is acquired by measuring the positions of the reference sphere 51 with the gauge head 62 while rotating the rotation target with the gauge head 62 directed toward the center 52 of the reference sphere 51, the displacement data being dependent on the rotation angles of the rotation target. The geometric errors are identified by least squares method using the above mathematical expression and the displacement data.

Since the reference sphere 51, which the gauge head 62 of the position measuring device 60 is directed toward, is positioned on the tool spindle (S2), it is possible to reduce the movement of the reference sphere 51 compared to when the reference sphere 51 is positioned offset from the rotation centerline AX1. This reduces a space for the measurement, and enables the measurement even if the position measuring device 60 cannot be attached to the tool spindle (S2). Then, the geometric errors are accurately identified by least squares method using the displacement data to be acquired and the above mathematical expression. Therefore, the above embodiment can provide the method for easily identifying the geometric errors between the axes in the machine tool having the limited movable range.

Various examples are available in the above-mentioned embodiment.

The linear axes may be three axes, for example, an X-axis, a Y-axis, and a Z-axis, but should not be limited to this example and may be two or more axes. As long as the linear axes are oriented differently from each other, the linear axes may or may not be perpendicular to each other.

The rotation axis may be, for example, a C-axis around the Z-axis, but should not be limited to this example and may be an A-axis around the X-axis, a B-axis around the Y-axis, or the like.

The swivel axis may be, for example, the B-axis around the Y-axis, but should not be limited to this example and may be the A-axis around the X-axis, the C-axis around the Z-axis, or the like.

The tool spindle refers to a part where the tool can be attached in the swivel unit. The tool spindle should not be limited to being rotatable, and may be non-rotatable.

When the geometric errors that the terms of the mathematical expression contain are represented by coefficients in the mathematical expression, the aforementioned mathematical expression have the coefficients representing the geometric errors. In this case, the geometric errors can be identified by determining the coefficients through least squares method using the aforementioned mathematical expression and the displacement data. In addition, the mathematical expression may include a constant representing part of the geometric errors.

Of course, the above-mentioned additional remarks also apply to the following embodiments.

(Embodiment 2)

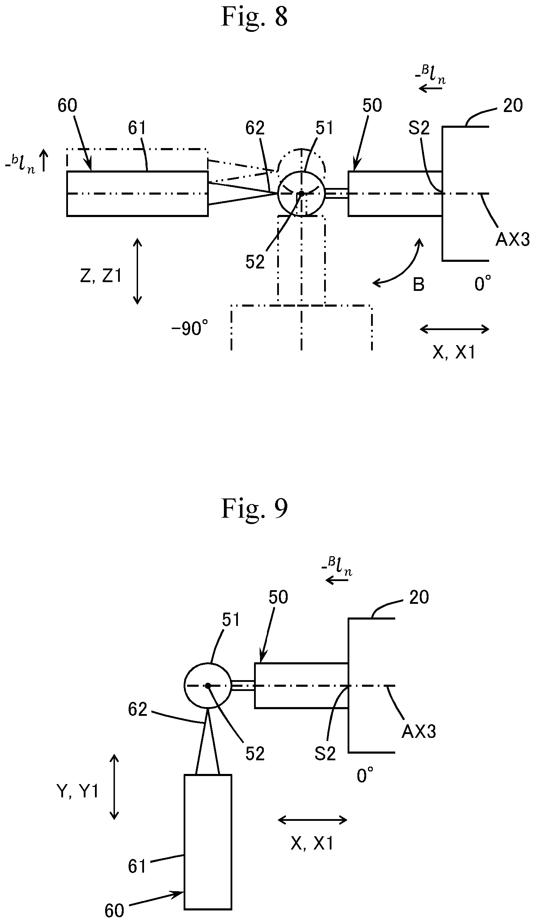

As exemplified in Fig. 8 etc., in the step (a3), at least one of the linear axes may be controlled so as to keep the gauge head 62 directed toward the center 52 of the reference sphere 51 regardless of rotation of the rotation target.

In this case, relative linear motion of the reference sphere 51 does not occur in appearance when acquiring the displacement data dependent on the rotation angles. This makes it possible to more easily identify the geometric errors between the axes in the machine tool having the limited movable range.

(Embodiment 3)

The linear axes may include a first linear axis along the rotation centerline AX1 and a second linear axis whose direction is different from both that of the rotation centerline AX1 and that of the swivel centerline AX2. The step (a3) may include:

(b1) bringing the gauge head 62 into contact with the reference sphere 51 with the tool spindle (S2) at a first swivel angle (e.g. B-axis 0 degrees) around the swivel centerline AX2, and determining a first center position (e.g. Z-directional position Zo) of the reference sphere 51 in the first linear axis based on positions of the gauge head 62 that vary depending on the motion of the first linear axis;

(b2) bringing the gauge head 62 into contact with the reference sphere 51 with the tool spindle (S2) at a second swivel angle (e.g. B-axis -90 degrees) different from the first swivel angle around the swivel centerline AX2, and determining a second center position (e.g. Z-directional position $Z_{-90}$) of the reference sphere 51 in the first linear axis based on positions of the gauge head 62 that vary depending on the motion of the first linear axis;

(b3) determining a distance (e.g. estimated tool length $^B l_n$) between a swivel center 21 of the swivel unit 20 and the center 52 of the reference sphere 51 based on the first center position and the second center position; and

(b4) causing the first linear axis and the second linear axis to perform an arc motion with the distance as a radius so as to keep the gauge head 62 directed toward the center 52 of the reference sphere 51 when the rotation target is the swivel unit 20.

In this case, it is possible to easily control the relative position of the reference sphere 51 constantly based on the distance between the swivel center 21 of the swivel unit 20 and the center 52 of the reference sphere 51. The above-mentioned embodiment can provide a suitable example for preventing the relative linear motion of the reference sphere in appearance.

In the present application, the terms "first", "second", ... are used to identify each component in multiple components having similarities, and may not mean order. Which component corresponds to "first," "second," ... among multiple components is determined relatively.

The above additional remark also applies to the following embodiments.

(Embodiment 4)

The first linear axis may be the Z-axis, and the second linear axis may be the X-axis. The tool spindle (S2) at the first swivel angle may be oriented along the X-axis, and the tool spindle (S2) at the second swivel angle may be oriented along the Z-axis.

In this case, the distance between the swivel center 21 of the swivel unit 20 and the center 52 of the reference sphere 51 can be easily determined from the difference between the first center position and the second center position in the Z-axis. The above-mentioned embodiment can provide a suitable specific example for preventing the linear motion of the reference sphere.

(Embodiment 5)

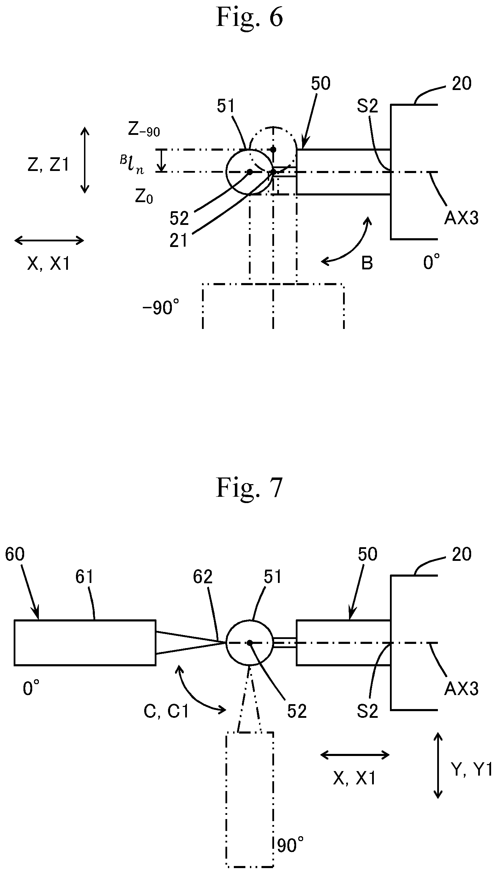

In the step (a3), as exemplified in Figs. 6 to 8, etc., the displacement data may be acquired by measuring positions of the reference sphere 51 with the gauge head 62 while rotating the rotation target within a predetermined angular range of 180 degrees or less.

Since the mathematical expression representing the displacement dependent on the rotation angles is used for identifying the geometric errors, acquiring the displacement data dependent on the rotation angles can be completed within a rotation of 180 degrees or less. The above-mentioned embodiment makes it possible to more easily identify the geometric errors between the axes in the machine tool having the limited movable range.

If linear axes are perpendicular to each other, it is preferable that the above angular range is 90 degrees or more. This is because the geometric errors are defined in directions parallel to two linear axes perpendicular to each other, and by the measurement of 90 degrees or more, the displacement data includes measurement values in the same direction as the geometric errors to be identified.

Although not included in Embodiment 5, the disclosure of the present application implies that the displacement data is acquired while rotating the rotation target within an angle of greater than 180 degrees and less than or equal to 360 degrees. For example, the rotation target may be rotated by 360 degrees.

(Embodiment 6)

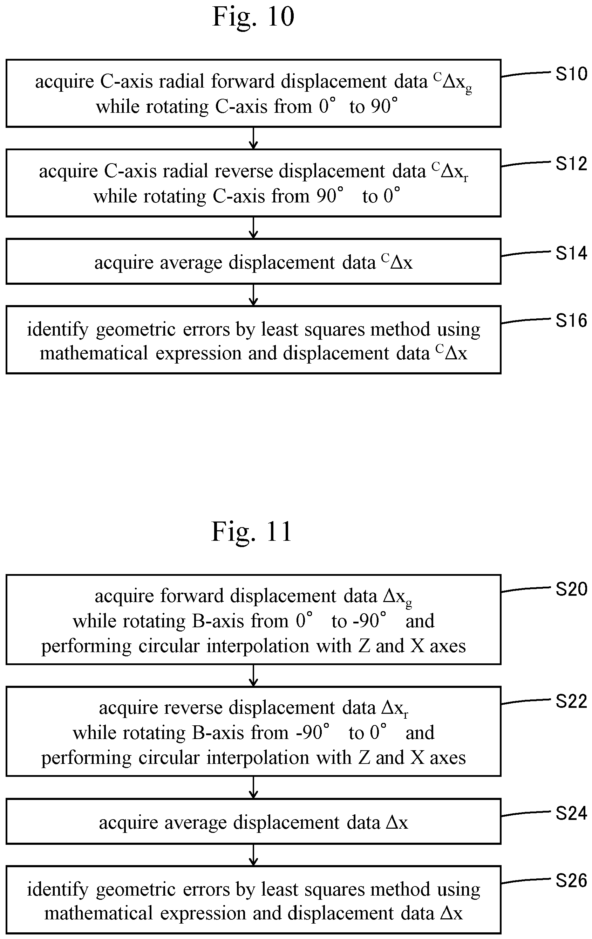

As exemplified in Figs. 10 and 11, in the step (a3), forward displacement data as the displacement data may be acquired by measuring positions of the reference sphere 51 with the gauge head 62 while rotating the rotation target toward a first orientation within the predetermined angular range. In the aforementioned step (a3), reverse displacement data as the displacement data may be acquired by measuring positions of the reference sphere 51 with the gauge head 62 while rotating the rotation target toward a second orientation opposite to the first orientation within the predetermined angular range. In the step (a4), the geometric errors may be identified by least squares method using an average of the forward displacement data and the reverse displacement data.

The measurement results of the positions of the reference sphere 51 often show slight differences depending on the direction of motion due to backlash and frictional force existing in the drive mechanism. Averaging the forward displacement data and the reverse displacement data can prevent the influence of the displacement due to differences in the direction of the motion of the rotation target. The above-mentioned embodiment makes it possible to improve the accuracy of identifying the geometric errors.

(Embodiment 7)

In the step (a3), first displacement data as the displacement data may be acquired by measuring positions of the reference sphere 51 under a first measurement condition while rotating the rotation target. In the aforementioned step (a3), second displacement data as the displacement data may be acquired by measuring positions of the reference sphere 51 under a second measurement condition different from the first measurement condition while rotating the rotation target. In the step (a4), the geometric errors may be identified by determining a first coefficient representing the geometric errors through least squares method using a first mathematical expression having the first coefficient and the first displacement data, and determining a second coefficient representing the geometric errors through least squares method using a second mathematical expression having the second coefficient and the second displacement data.

In this case, since the coefficients of the multiple mathematical expressions are determined based on the displacement data acquired under the multiple measurement conditions, it is possible to identify more numbers of the geometric errors.

(Embodiment 8)

As exemplified in Fig. 1, the linear axes may include an X-axis, a Y-axis, and a Z-axis.

The Y-axis may be oriented along the swivel centerline AX2, and the Z-axis may be oriented along the rotation centerline AX1. The rotation unit (10) may be a spindle (e.g. front spindle 10) capable of gripping the workpiece W1 and moving along the rotation centerline AX1. The swivel unit 20 may be a B-axis unit where a tool TO1 for machining the workpiece W1 is configured to be mounted along the tool spindle (S2).

In this case, it is possible to provide the method for easily identifying the geometric errors between the axes in the spindle-moving lathe having the limited movable range.

(2) Configuration examples of axes of a spindle-moving lathe

Fig. 1 schematically shows a configuration example of a lathe 1 as an example of a machine tool.

The lathe 1 shown in Fig. 1 is a spindle-moving lathe as an example of an automatic lathe, and is also an NC lathe includes a control unit 30 also called an NC (Numerical Control) device. The lathe 1 includes a front spindle 10, a guide bush 11, a back spindle 12, a gang tool post 15 having a swivel unit 20, a back machining tool post 25, the control unit 30, and an operation unit 31.

If the workpiece W1 is long, the workpiece W1 is supplied to the front spindle 10 from the rear end of the front spindle 10. The front spindle 10 releasably grips the workpiece W1, and is capable of rotating together with the workpiece W1 around the rotation centerline AX1. In other words, the workpiece W1 is capable of rotating around the rotation centerline AX1 by being gripped by the front spindle 10. The aforementioned front spindle 10 is movable along the rotation centerline AX1. The control unit 30 controls a linear motion of the front spindle 10 along the Z1-axis. The aforementioned control unit 30 controls a rotary motion of the front spindle 10 around the rotation centerline AX1. In other words, the control unit 30 controls a C1-axis around the Z1-axis. The guide bush 11 supports the workpiece W1 protruding forward from the front spindle 10 slidably in the Z1 direction. It should be noted that the guide bush 11 may be absent from the lathe 1, the workpiece W1 may be short, and the workpiece W1 may be supplied to the front spindle 10 from the front end of the front spindle 10.

If the workpiece W1 is short, such short workpiece W1 may be supplied from the rear end of the front spindle 10, or may be supplied from the front end of the front spindle 10 by using a loader. For this reason, it is possible to apply the present method for identifying the geometric errors to the case where the workpiece W1 is short. The back spindle 12 releasably grips the workpiece W1 after front machining, and is capable of rotating together with the workpiece W1 around the rotation centerline AX1. In other words, the workpiece W1 is capable of rotating around the rotation centerline AX1 by being gripped by the back spindle 12. The aforementioned back spindle 12 is movable along the rotation centerline AX1, and further movable along the X2-axis. The control unit 30 controls a linear motion of the back spindle 12 along the Z2-axis, and controls a linear motion of the back spindle 12 along the X2-axis. The aforementioned control unit 30 controls a rotary motion of the back spindle 12 around the rotation centerline AX1. In other words, the control unit 30 controls a C2-axis around the Z2-axis.

Tools TO1 for machining the workpiece W1 are directly or indirectly attached to the gang tool post 15 and the back machining tool post 25. The control unit 30 controls a linear motion of the gang tool post 15 having the swivel unit 20 along an X1-axis. The aforementioned control unit 30 controls a linear motion of the gang tool post 15 having the swivel unit 20 along a Y1-axis, and controls a linear motion of the back machining tool post 25 along a Y2-axis. The swivel unit 20 has tool spindles S1, S2, ..., and is capable of swiveling around the swivel centerline AX2 whose direction is different from that of the tool spindles. Fig. 1 shows a tool spindle centerline AX3 representing a centerline of tool spindle S2. The control unit 30 controls a rotary motion of the swivel unit 20 around the swivel centerline AX2. In other words, the control unit 30 controls the B-axis around the Y1-axis. The aforementioned swivel unit 20 can be called the B-axis unit where the tools TO1 for machining the workpiece W1 can be mounted along the tool spindles S1, S2,....

The control unit 30 includes a CPU (Central Processing Unit) or a processor, a ROM (Read Only Memory) in which a control program is written, a RAM (Random Access Memory) in which machining programs can be stored, a timer circuit, interfaces, and the like. The CPU uses the RAM as a work area, and realizes functions of the NC device by executing the control program recorded in the ROM. Of course, some or all of the functions realized by the control program may be realized by other means such as ASIC (Application Specific Integrated Circuit).

The operation unit 31 including an input unit and a display unit is connected to the control unit 30. The operation unit 31 can accept operations from an operator to manually operate each axis.

Herein, the X1-axis and the X2-axis are collectively called the X-axis, the Y1-axis and the Y2-axis are collectively called the Y-axis, the Z1-axis and the Z2-axis are collectively called the Z-axis, and the C1-axis and the C2-axis are collectively called the C-axis. The X-axis, the Y-axis, the Z-axis, the B-axis, and the C-axis can be called control axes to be controlled by the control unit 30. In the present specific example, the front spindle 10 exemplifies the rotation unit, the second tool spindle S2 from the bottom of the swivel unit 20 exemplifies the tool spindle, and the geometric errors between the axes from the workpiece W1 gripped by the front spindle 10 to the tool spindle S2 are targeted to be identified. Thus, in the present specific example, the linear axes includes the X-axis, the Y-axis, and the Z-axis. The Y-axis is along the swivel centerline AX2. Furthermore, the Z-axis is along the rotation centerline AX1. The Z-axis is the first linear axis along the rotation centerline AX1. The X-axis is the second linear axis whose direction is different from both that of the rotation centerline AX1 and that of the swivel centerline AX2. The B-axis is the swivel axis around the swivel centerline AX2. The C-axis is the rotation axis around the rotation centerline AX1. The control unit 30 controls the motions of five axes, namely, the rotary motion of the C-axis as the rotation axis, the rotary motion of the B-axis as the swivel axis, and the linear motion of the X-axis, the Y-axis, and the Z-axis as the linear axes.

The directions of the X-axis, the Y-axis, and the Z-axis should not be limited. In the example shown in Fig. 1, the X-axis and the Z-axis are horizontal, and the Y-axis is vertical. That is to say, the rotation centerline AX1 is oriented horizontally, and the swivel centerline AX2 is oriented vertically. Furthermore, the tool spindle centerline AX3 is oriented horizontally. The X-axis and the Y-axis are perpendicular to each other, but as long as the X-axis and the Y-axis are oriented differently from each other, the X-axis and the Y-axis do not have to be perpendicular to each other. The X-axis and the Z-axis are perpendicular to each other, but as long as the X-axis and the Z-axis are oriented differently from each other, the X-axis and the Z-axis do not have to be perpendicular to each other. The Y-axis and the Z-axis are perpendicular to each other, but as long as the Y-axis and the Z-axis are oriented differently from each other, the Y-axis and the Z-axis do not have to be perpendicular to each other. It should be noted that the linear axes being oriented differently from each other shall be interpreted as the linear axes crossing each other. The above-mentioned tool spindle S2 is perpendicular to the Y-axis, but as long as the tool spindle S2 is oriented differently from the Y-axis, the tool spindle S2 is does not have to be perpendicular to the Y-axis.

In addition, descriptions of positional relationships between individual parts are merely exemplary. Thus, the embodiments of the present application imply that the horizontal direction is changed to the vertical direction or the anteroposterior direction, the vertical direction is changed to the horizontal direction or the anteroposterior direction, the anteroposterior direction is changed to the horizontal direction or the vertical direction, the rotation direction is reversed, and so on.

(3) Mathematical model considering geometric errors

For convenience, the tool spindle S2 is also called an S2-axis. From the workpiece W1 gripped by the front spindle 10 to the tool spindle S2, the C1-axis, the Z1-axis, the X1-axis, the Y1-axis, the B-axis, and the S2-axis exist. Based on Form-Shaping-Theory, it is defined that each of the six axes has its own coordinate system. Each coordinate system has six geometric errors:

translational errors $\delta_x$, $\delta_y$, and $\delta_z$ in the X direction, the Y direction, and the Z direction respectively, and rotational errors $\alpha$, $\beta$, and $\gamma$ around the X-axis, the Y-axis, and the Z-axis respectively. However, by expressing the geometric errors as relative errors between adjacent coordinate axes, it becomes unnecessary to consider all six geometric errors.

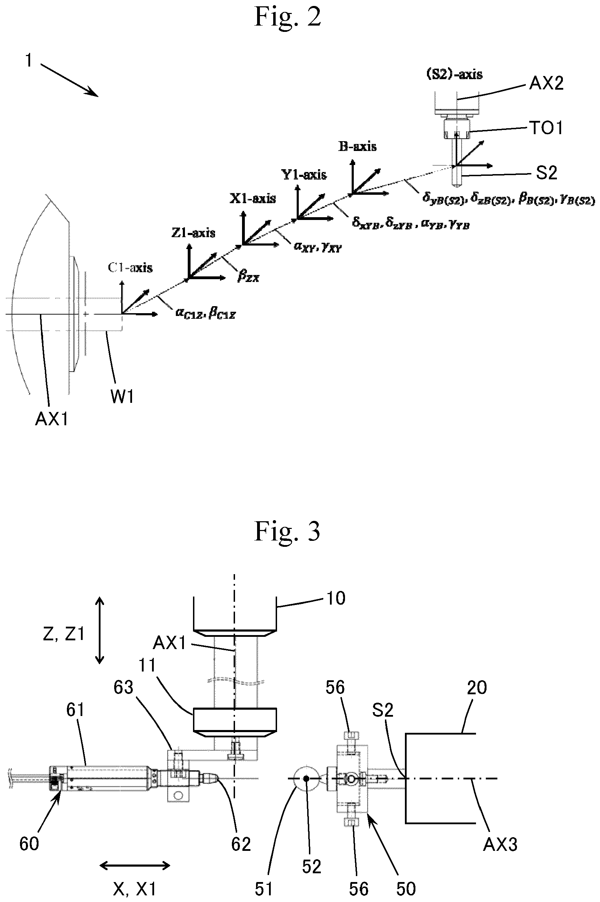

Fig. 2 schematically shows the geometric errors between the adjacent coordinate axes. For example, between the C1-axis and the Z1-axis, $\gamma$, which is an omissible error of C1-axis motion, and $\delta_x$, $\delta_y$, and $\delta_z$, which are omissible errors of Z1-axis motion that do not overlap with the C1-axis motion, can be omitted. For this reason, the geometric errors that need to be considered between the C1-axis and the Z1-axis become $\alpha_{C1Z}$ and $\beta_{C1Z}$. In notation of each rotational error, it should be noted that the subscript "C1" refers to the C1-axis, and the subscript "Z" refers to the Z-axis as the Z1-axis. Namely, the rotational errors $\alpha_{C1Z}$ and $\beta_{C1Z}$ refer to the geometric errors between the axis represented by the first subscript and the axis represented by the second subscript. Between the Z1-axis and the X1-axis, between the X1-axis and the Y1-axis, between the Y1-axis and the B-axis, and between the B-axis and the S2-axis, the geometric errors shown in Fig. 2 should be considered.

First, a mathematical model will be constructed without considering the geometric errors. To do this, three coordinate systems will be defined. The first coordinate system is a workpiece coordinate system fixed at the origin of the workpiece. The second coordinate system is a B-axis coordinate system fixed at the rotation center of the B-axis. The third coordinate system is a tool coordinate system fixed at the tip point of the tool, that is, tool center point. Then, a vector of the position of the tool center point in the workpiece coordinate system is denoted as $^{W}X_T$, a vector of the position of the rotation center of the B-axis in the workpiece coordinate system is denoted as $^{W}X_B$, and a vector of the position of the tool center point in the B-axis coordinate system is denoted as $^{B}X_T$. In notation of the vector representation, the upper left subscript refers to the coordinate system, and the lower right subscript refers to the target coordinate. Using rotational angular displacement $D_C$ of the C-axis, position vector $^{W}X_B$ representing the position of the rotation center of the B-axis in the workpiece coordinate system, and position vector $^{B}X_T$ representing coordinates of the tool center point in the B-axis coordinate system, the position vector $^{W}X_T$ representing the position of the tool center point in the workpiece coordinate system is expressed by the following expression.

$$^{W}X_T = D_C\,^{W}X_B\,^{B}X_T \qquad \cdots (1)$$

Herein, a vector representing x direction displacement, y direction displacement, and z direction displacement of the machine tool is denoted as $D_{xyz}$, and a position vector representing an initial position of the rotation center of the B-axis in the workpiece coordinate system is denoted as $^{W}X_{B0}$. The relationship between $^{W}X_B$, $D_{xyz}$, and $^{W}X_{B0}$ is expressed by the following expression.

$$^{W}X_{B} = D_{xyz}\,^{W}X_{B0} \qquad \cdots(2)$$

where

$$D_{xyz} = \begin{bmatrix} 1 & 0 & 0 & x \\ 0 & 1 & 0 & y \\ 0 & 0 & 1 & -z \\ 0 & 0 & 0 & 1 \end{bmatrix}$$

$$^{W}X_{B0} = \begin{bmatrix} 1 & 0 & 0 & ^{W}x_{B0} \\ 0 & 1 & 0 & 0 \\ 0 & 0 & 1 & 0 \\ 0 & 0 & 0 & 1 \end{bmatrix}$$

In the present disclosure, x, y, and z are the displacement in the X direction, the displacement in the Y direction, and the displacement in the Z direction, respectively. Since the motion of the tool relative to the workpiece is expressed in the model, it should be noted that z, which represents relative displacement of the workpiece, becomes a negative value. Furthermore, $^{W}x_{B0}$ denotes X coordinates of the initial position of the rotation center of the B-axis in the workpiece coordinate system.

Furthermore, when the rotation angle of the B-axis is 0 degrees, a position vector representing coordinates of the tool center point in the B-axis coordinate system is denoted as $^{B}L$. The relationship between $^{B}X_{T}$ and $^{B}L$ is expressed by the following expression.

$$^{B}X_{T} = D_{B}\,^{B}L \qquad \cdots(3)$$

where

$$^{B}L = \begin{bmatrix} -\,^{B}l_{r} \\ 0 \\ 0 \\ 1 \end{bmatrix}$$

"$^{B}l_{r}$" denotes a length from an actual rotation center of the B-axis to the tool's tip.

When machining with the automatic lathe, tool center point control is carried out for causing the tool's tip to move along commanded paths even when the tool's orientation changes. In order to carry out the tool center point control, in the control unit 30 of the lathe 1 shown in Fig. 1, it is possible to set a length from the rotation center of the B-axis to the tool's tip as a tool shape offset. A tool shape offset radius value indicating the tool shape offset is denoted as $^{B}l_{n}$. The difference between the tool shape offset radius value $^{B}l_{n}$ and the length $^{B}l_{r}$ from the actual rotation center of the B-axis to the tool's tip refers to an error of tool length (that is, length of the tool). Since this error significantly affects machining accuracy, the error of the tool length must also be considered. In the present specific example, the error of the tool length will be treated as part of the geometric errors. Furthermore, the tool shape offset radius value $^{B}l_{n}$ relates to x displacement and y displacement of $D_{xyz}$ representing the motion of the lathe 1.

From Expressions (1), (2) and (3), the mathematical model constructed from the configuration of the axes of the lathe 1 shown in Fig. 1, without considering the geometric errors, is expressed by the following expression.

$$^{W}X_{T} = D_{C}D_{xyz}\,^{W}X_{B0}D_{B}\,^{B}L \qquad \cdots(4)$$

where

$$D_C = \begin{bmatrix} \cos c & -\sin c & 0 & 0 \\ \sin c & \cos c & 0 & 0 \\ 0 & 0 & 1 & 0 \\ 0 & 0 & 0 & 1 \end{bmatrix}$$

$$D_B = \begin{bmatrix} \cos b & 0 & \sin b & 0 \\ 0 & 1 & 0 & 0 \\ -\sin b & 0 & \cos b & 0 \\ 0 & 0 & 0 & 1 \end{bmatrix}$$

$D_C$ and $D_B$ are homogeneous transformation matrices representing the rotational angular displacement of the C-axis and the rotational angular displacement of the B-axis, respectively.

The geometric errors are expressed as positions and angles between coordinate systems fixed to their respective axes. The coordinate systems and the geometric errors existing between the coordinate systems are shown in Fig. 2. By using the homogeneous transformation matrices containing these geometric errors, it is possible to express the motion of the tool in the workpiece coordinate system. The constructed mathematical model is expressed by the following expression.

$$^W X_T = D_{\alpha C1Z} D_{\beta C1Z} D_C D_{\alpha XY} D_{\beta ZX} D_{\gamma XY} D_{xyz} {}^W X_{B0}\, D_{\delta xYB} D_{\delta xYB} D_{\gamma YB} D_B D_{\delta yB(S2)} D_{\delta zB(S2)} D_{\beta B(S2)} D_{\gamma B(S2)}\, {}^{BL} \tag{5}$$

The homogeneous transformation matrices corresponding to the respective geometric errors are expressed as follows:

$$D_{\alpha C1Z} = \begin{bmatrix} 1 & 0 & 0 & 0 \\ 0 & \cos \alpha_{C1Z} & -\sin \alpha_{C1Z} & 0 \\ 0 & \sin \alpha_{C1Z} & \cos \alpha_{C1Z} & 0 \\ 0 & 0 & 0 & 1 \end{bmatrix}$$

$$D_{\beta C1Z} = \begin{bmatrix} \cos \beta_{C1Z} & 0 & \sin \beta_{C1Z} & 0 \\ 0 & 1 & 0 & 0 \\ -\sin \beta_{C1Z} & 0 & \cos \beta_{C1Z} & 0 \\ 0 & 0 & 0 & 1 \end{bmatrix}$$

$$D_{\alpha XY} = \begin{bmatrix} 1 & 0 & 0 & 0 \\ 0 & \cos \alpha_{XY} & -\sin \alpha_{XY} & 0 \\ 0 & \sin \alpha_{XY} & \cos \alpha_{XY} & 0 \\ 0 & 0 & 0 & 1 \end{bmatrix}$$

$$D_{\beta ZX} = \begin{bmatrix} \cos \beta_{ZX} & 0 & \sin \beta_{ZX} & 0 \\ 0 & 1 & 0 & 0 \\ -\sin \beta_{ZX} & 0 & \cos \beta_{ZX} & 0 \\ 0 & 0 & 0 & 1 \end{bmatrix}$$

$$D_{\gamma_{XY}} = \begin{bmatrix} \cos\gamma_{XY} & -\sin\gamma_{XY} & 0 & 0 \\ \sin\gamma_{XY} & \cos\gamma_{XY} & 0 & 0 \\ 0 & 0 & 1 & 0 \\ 0 & 0 & 0 & 1 \end{bmatrix}$$

$$D_{\delta_{xYB}} = \begin{bmatrix} 1 & 0 & 0 & \delta_{xYB} \\ 0 & 1 & 0 & 0 \\ 0 & 0 & 1 & 0 \\ 0 & 0 & 0 & 1 \end{bmatrix}$$

$$D_{\delta_{zYB}} = \begin{bmatrix} 1 & 0 & 0 & 0 \\ 0 & 1 & 0 & 0 \\ 0 & 0 & 1 & \delta_{zYB} \\ 0 & 0 & 0 & 1 \end{bmatrix}$$

$$D_{\alpha_{YB}} = \begin{bmatrix} 1 & 0 & 0 & 0 \\ 0 & \cos\alpha_{YB} & -\sin\alpha_{YB} & 0 \\ 0 & \sin\alpha_{YB} & \cos\alpha_{YB} & 0 \\ 0 & 0 & 0 & 1 \end{bmatrix}$$

$$D_{\gamma_{YB}} = \begin{bmatrix} \cos\gamma_{YB} & -\sin\gamma_{YB} & 0 & 0 \\ \sin\gamma_{YB} & \cos\gamma_{YB} & 0 & 0 \\ 0 & 0 & 1 & 0 \\ 0 & 0 & 0 & 1 \end{bmatrix}$$

$$D_{\delta_{yB(S2)}} = \begin{bmatrix} 1 & 0 & 0 & 0 \\ 0 & 1 & 0 & \delta_{yB(S2)} \\ 0 & 0 & 1 & 0 \\ 0 & 0 & 0 & 1 \end{bmatrix}$$

$$D_{\delta_{zB(S2)}} = \begin{bmatrix} 1 & 0 & 0 & 0 \\ 0 & 1 & 0 & 0 \\ 0 & 0 & 1 & \delta_{zB(S2)} \\ 0 & 0 & 0 & 1 \end{bmatrix}$$

$$D_{\beta_{B(S2)}} = \begin{bmatrix} \cos\beta_{B(S2)} & 0 & \sin\beta_{B(S2)} & 0 \\ 0 & 1 & 0 & 0 \\ -\sin\beta_{B(S2)} & 0 & \cos\beta_{B(S2)} & 0 \\ 0 & 0 & 0 & 1 \end{bmatrix}$$

$$D_{\gamma_{B(S2)}} = \begin{bmatrix} \cos\gamma_{B(S2)} & -\sin\gamma_{B(S2)} & 0 & 0 \\ \sin\gamma_{B(S2)} & \cos\gamma_{B(S2)} & 0 & 0 \\ 0 & 0 & 1 & 0 \\ 0 & 0 & 0 & 1 \end{bmatrix}$$

(4) Specific examples of the method for identifying geometric errors

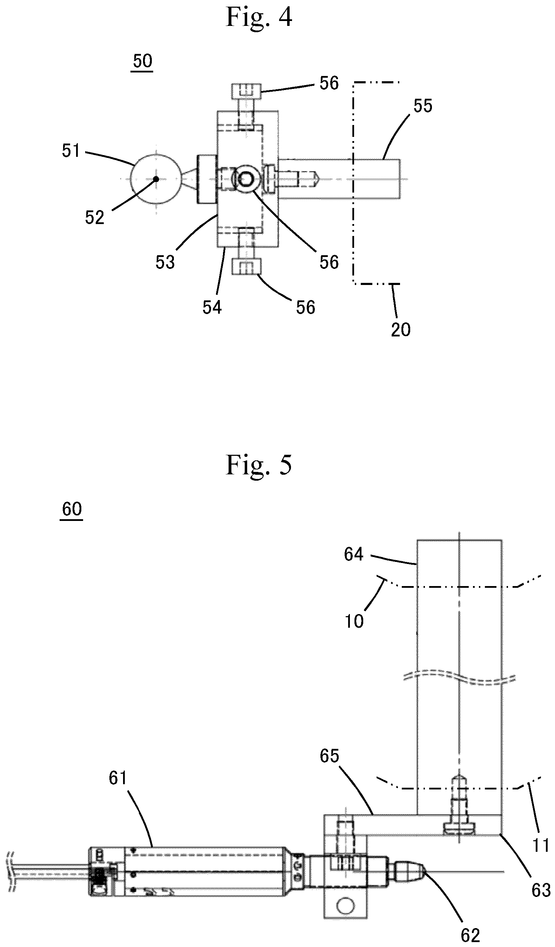

Fig. 3 schematically shows an example of attaching the reference sphere 51 and the position measuring device 60 to the spindle-moving lathe 1 in order to identify the geometric errors between the axes in the lathe 1. Fig. 4 schematically shows an example of a tool-side jig 50 including the reference sphere 51. Fig. 5 schematically shows an example of the position measuring device 60.

In the present specific example, the method for identifying the geometric errors includes the above-mentioned steps (a1) to (a4).

In the step (a1), the reference sphere 51 is positioned so as to align the center 52 with the centerline of the tool spindle (S2). The tool-side jig 50 includes the reference sphere 51, a base 53 connected with the reference sphere 51, a socket 54 that holds the base 53 allowing adjustment of the position of the center 52 of the reference sphere 51, and a cylinder 55 connected with the socket 54. The cylinder 55 is attached to the tool spindle S2 along the tool spindle centerline AX3. The socket 54 has a recess for inserting the base 53, and is threaded with adjusting screws 56. Each of the adjusting screws 56 penetrates from the outer circumference of socket 54 to the recess of the socket 54, and can adjust the position of the center 52 of the reference sphere 51 through the base 53 that is in the recess. For example, the operator of the lathe 1 brings a gauge head of a dial gauge into contact with the reference sphere 51 in a direction perpendicular to the tool spindle centerline AX3, and operates the adjusting screws 56 so as to minimize the variation of the reading of the dial gauge when rotating the tool spindle S2. At this time, the operator should put the lathe 1 in manual mode by performing an operation on the operation unit 31 to manually operate each of the axes. When the variation of the reading of the dial gauge becomes zero, it can be considered that the tool spindle centerline AX3 and the center 52 of the reference sphere 51 are aligned.

In the step (a1), it should be noted that it is not necessary to align the center 52 of the reference sphere 51 with the swivel center 21 (refer to Fig. 6) of the swivel unit 20. For this reason, work for attaching the tool-side jig 50 including the reference sphere 51 can be performed quickly.

In the step (a2), the position measuring device 60 is attached to the front spindle 10 so as to direct the gauge head 62 of the position measuring device 60 toward the rotation centerline AX1. The position measuring device 60 includes a device body 61, a gauge head 62 at the tip of the device body 61, and a workpiece-side jig 63. The workpiece-side jig 63 includes a cylinder 64 to be gripped by the front spindle 10 through the guide bush 11 along the rotation centerline AX1, and a holder 65 to be fixed to the front end of the cylinder 64 and to hold the device body 61. The device body 61 is held by the holder 65 so as to direct the gauge head 62 toward the rotation centerline AX1. The operator can attach the position measuring device 60 to the front spindle 10 so as to direct the gauge head 62 toward the rotation centerline AX1 by causing the front spindle 10 to grip the cylinder 64 through the guide bush 11 in the manual mode. The position measuring device 60 according to the present specific example is an electric micrometer that measures the position of the gauge head 62 contacting a target object as an electrical signal, but it is also possible to use a non-contact sensor etc. that measures the position of the target object without contact as the position measuring device.

It should be noted that the step (a2) may be performed after the step (a1) or before the step (a1).

In the step (a3), the displacement data relative to the center 52 of the reference sphere 51 is acquired by measuring the positions of the reference sphere 51 with the gauge head 62 while rotating the rotation target with the gauge head 62 directed toward the center 52 of the reference sphere 51, the displacement data being dependent on the rotation angles of the rotation target. The rotation target is either the swivel unit 20 or the front spindle 10. The measurement conditions are set depending on the mathematical expressions derived from the above-mentioned mathematical model. The aforementioned mathematical expressions have the terms including the geometric errors to be identified, and represent the displacement dependent on the rotation angles of the rotation target. The details of the step (a3) will be described later.

In the step (a4), the geometric errors are identified by least squares method using the mathematical expressions derived from the mathematical model and the displacement data. Examples of mathematical expressions used for identifying the geometric errors are described below.

When rotating the C-axis, that is, the front spindle 10, X-directional displacement $^{C}\Delta x$ of the center 52 of the reference sphere 51 in the C-axis coordinate system can be expressed by the following expression, organized according to the above-mentioned mathematical model.

$$^{C}\Delta x = -\delta_{yB(S2)} \sin c + \left\{\delta_{xYB} - \left(^{b}l_r - {}^{b}l_n\right)\right\} \cos c \quad \cdots (6)$$

In Expression (6), c represents the rotational angular displacement of the C-axis, geometric error $\delta_{yB(S2)}$ represents the translational error in the Y direction between the B-axis and the S2-axis, and geometric error $\delta_{xYB}$ represents the translational error of the X direction between the Y-axis and the B-axis. In notation of each translational error, it should be noted that the first subscript refers to the name of the axis corresponding to the error direction, the second subscript refers to the name of the reference axis, and the third subscript refers to the name of the coordinate axis for measuring the translational error. Furthermore, $^{b}l_r$ represents the actual tool length, and $^{b}l_n$ represents the tool length set as the tool shape offset in the control unit 30 of the lathe 1.

Expression (6) contains a term including sin and a term including cos. In Expression (6), since the coefficient $\{\delta_{xYB}-(^{b}l_r-{}^{b}l_n)\}$, which is the coefficient of cos, contains multiple geometric errors, the coefficient is not identified. For this reason, first, the geometric error $\delta_{yB(S2)}$, which is the coefficient of sin, is identified by Expression (6).

When rotating the B-axis, that is, the swivel unit 20, while simultaneously controlling three axes of the B-axis, the Z-axis, and the X-axis, X-directional displacement $\Delta x$ of the center 52 of the reference sphere 51 can be expressed by the following expression, organized according to the above-mentioned mathematical model.

$$\Delta x = \left(\delta_{zB(S2)} + {}^{b}l_r\beta_{B(S2)}\right)\sin b - \left(^{b}l_r - {}^{b}l_n\right)\cos b + \delta_{xYB} \quad \cdots (7)$$

In Expression (7), b represents the rotational angular displacement of the B-axis, geometric error $\delta_{zB(S2)}$ represents the Z-directional translational error between the B-axis and the S2-axis, geometric error $\beta_{B(S2)}$ represents the rotational error around the Y-axis between the B-axis and the S2-axis, and geometric error $\delta_{xYB}$ represents the X-directional translational error between the Y-axis and the B-axis.

Expression (7) contains a term including sin, a term including cos, and a constant term. The geometric error $(^{b}l_r-{}^{b}l_n)$, which is the coefficient of cos, is identified by Expression (7).

The mathematical expression is shown again for representing the X-directional displacement $^{C}\Delta x$ of the center 52 of the reference sphere 51 in the C-axis coordinate system during the C-axis rotation.

$$^{C}\Delta x = -\delta_{yB(S2)} \sin c + \left\{\delta_{xYB} - \left(^{b}l_r - {}^{b}l_n\right)\right\} \cos c \quad \cdots (8)$$

Since the geometric error $(^{b}l_r-{}^{b}l_n)$ is identified from Expression (7) described above, the geometric error $\delta_{xYB}$ included in the coefficient of cos in Expression (8) can be identified.

When rotating the B-axis, that is, the swivel unit 20, while simultaneously controlling the three axes of the B-axis, the Z-axis, and the X-axis, Y-directional displacement $\Delta y$ of the center 52 of the reference sphere 51 can be expressed by the following expression, organized according to the above-mentioned mathematical model.

$$\Delta y = - {}^{b}l_n\alpha_{YB}\sin b - {}^{b}l_n\gamma_{YB}\cos b + \delta_{yB(S2)} - {}^{b}l_n\,\gamma_{B(S2)} \quad \cdots (9)$$

In Expression (9), geometric error $\alpha_{YB}$ represents the rotational error around the X-axis between the Y-axis and the B-axis, geometric error $\gamma_{YB}$ represents the rotational error around the Z-axis between the Y-axis and the B-axis, and geometric error $\gamma_{B(S2)}$ represents the rotational error around the Z-axis between the B-axis and the S2-axis.

Expression (9) contains a term including sin, a term including cos, and a constant terms. Since the tool length $^{b}l_n$ corresponding to the tool shape offset is known, the geometric error $\alpha_{YB}$ included in the coefficient of sin and the geometric error $\gamma_{YB}$ included in the coefficient of cos can be identified from Expression (9).

Moreover, it is possible to identify more geometric errors by deriving different mathematical expressions based on the above-mentioned mathematical model and setting measurement conditions according to those mathematical expressions.

The coefficients (including constants) of Expressions (6) to (9) can be determined by least squares method. Herein, an example will be explained about Expression (7).

First, the coefficients of Expression (7) is replaced as follows:

$$x_i = \alpha \sin b_i + \beta \cos b_i + \gamma \quad \cdots (10)$$

where

$$\alpha = \delta_{zB(S2)} + {}^{b}l_r \beta_{B(S2)}, \quad \beta = -\left({}^{b}l_r - {}^{b}l_n\right), \quad \gamma = \delta_{xYB}$$

The variable i is a variable for identifying individual displacement data acquired from repeated measurements of the positions of the reference sphere 51. It should be noted that the coefficients $\alpha$, $\beta$ and $\gamma$ in Expression (10) are different from the rotational errors.

Solving Expression (10) yields the following:

$$\alpha = \frac{A}{d}, \quad \beta = \frac{B}{d}, \quad \gamma = \frac{C}{d} \qquad \cdots (11)$$

where

$$A = \sum_i^n sinb_i \sum_i^n cosb_i \sum_i^n x_i cosb_i + \sum_i^n x_i \sum_i^n cosb_i \sum_i^n sinb_i cosb_i + \sum_i^n 1 \sum_i^n x_i sinb_i \sum_i^n cosb_i cosb_i$$
$$- \sum_i^n 1 \sum_i^n x_i cosb_i \sum_i^n sinb_i cosb_i - \sum_i^n cosb_i \sum_i^n cosb_i \sum_i^n x_i sinb_i - \sum_i^n x_i \sum_i^n sinb_i \sum_i^n cosb_i cosb_i$$

$$B = \sum_i^n sinb_i \sum_i^n sinb_i \sum_i^n x_i cosb_i + \sum_i^n x_i \sum_i^n cosb_i \sum_i^n sinb_i sinb_i + \sum_i^n 1 \sum_i^n x_i sinb_i \sum_i^n sinb_i cosb_i$$
$$- \sum_i^n 1 \sum_i^n x_i cosb_i \sum_i^n sinb_i sinb_i - \sum_i^n sinb_i \sum_i^n cosb_i \sum_i^n x_i sinb_i - \sum_i^n x_i \sum_i^n sinb_i \sum_i^n sinb_i cosb_i$$

$$C = \sum_i^n sinb_i \sum_i^n sinb_i cosb_i \sum_i^n x_i cosb_i + \sum_i^n cosb_i \sum_i^n sinb_i cosb_i \sum_i^n x_i sinb_i$$
$$+ \sum_i^n x_i \sum_i^n sinb_i sinb_i \sum_i^n cosb_i cosb_i - \sum_i^n cosb_i \sum_i^n sinb_i sinb_i \sum_i^n x_i cosb_i$$
$$- \sum_i^n x_i \sum_i^n sinb_i cosb_i \sum_i^n sinb_i cosb_i - \sum_i^n sinb_i \sum_i^n cosb_i cosb_i \sum_i^n x_i sinb_i$$

$$d = \sum_i^n sinb_i \sum_i^n cosb_i \sum_i^n sinb_i cosb_i + \sum_i^n sinb_i \sum_i^n cosb_i \sum_i^n sinb_i cosb_i$$
$$+ \sum_i^n 1 \sum_i^n sinb_i sinb_i \sum_i^n cosb_i cosb_i - \sum_i^n sinb_i \sum_i^n sinb_i \sum_i^n cosb_i cosb_i$$
$$- \sum_i^n cosb_i \sum_i^n cosb_i \sum_i^n sinb_i sinb_i - \sum_i^n 1 \sum_i^n sinb_i cosb_i \sum_i^n sinb_i cosb_i$$

Using Expression (11), the coefficients of Expression (7) can be determined based on the displacement data.

For Expression (9) as well, by setting $\alpha$ as the coefficient of sin, $\beta$ as the coefficient of cos, and $\gamma$ as the constant, the coefficients can be determined based on the displacement data using Expression (11). For Expressions (6) and (8), by setting $\alpha$ as the coefficient of sin, $\beta$ as the coefficient of cos, and the constant as 0, and by reading the rotational angular displacement c in Expression (11) as the rotational angular displacement b, the coefficients can be determined based on the displacement data.

By focusing on variation components of measured waveforms and using the coefficients of sin and cos, which are calculated by least squares method, for identifying the geometric errors, the measurement can be done even with an angular range of, for example, 90 degrees. While the geometric errors can be identified with measurement in an angular range smaller than 90 degrees, the measurement is affected by factors of measurement errors and motion errors other than the geometric errors. Since the geometric errors are defined in directions parallel to two linear axes perpendicular to each other, by the measurement over an angular range of 90 degrees or more, the displacement data includes measurement values in the same direction as the geometric errors to be identified. Therefore, it is preferable that the angular range for the measurement is 90 degrees or more.

The constant terms other than the coefficients of sin and cos in Expressions (7) and (9), that is, the constant terms equivalent to $\gamma$ in Expression (10) are affected by the attached position of the position measuring device in the direction of its measurement sensitivity and the deviation of the zero point. In the present specific example, since the constant terms in Expressions (7) and (9) are not used for identifying the geometric errors, the geometric errors can be identified without being affected by the attached position of the position measuring device in the direction of its measurement sensitivity and the deviation of the zero point. By not using the constant terms for identifying the geometric errors, there is no need to consider the attached position of the position measuring device in the direction of its measurement sensitivity in the step (a2), and the attached position does not affect the identification results of the geometric errors. In addition, there is an effect that the time required for attaching the position measuring device and adjusting its position can be reduced.

Next, referring to Figs. 6 to 11, the details of the step (a3) for acquiring the displacement data will be described.

Fig. 6 schematically shows an example where the X and Z directional positions of the center 52 of the reference sphere 51 change when the swivel unit 20 rotates -90 degrees. In Fig. 6, the swivel unit 20 at B-axis 0 degrees as the first swivel angle is shown in solid lines, and the swivel unit 20 at B-axis -90 degrees as the second swivel angle is shown in two-dot chain lines. Since the tool spindle centerline AX3 at B-axis 0 degrees is along the X direction, the direction of the tool spindle S2 at B-axis 0 degrees is along the X-axis. Since the tool spindle centerline AX3 at B-axis -90 degrees is along the Z direction, the direction of the tool spindle S2 at B-axis -90 degrees is along the Z-axis.

As mentioned above, the center 52 of the reference sphere 51 is not aligned with the swivel center 21 of the swivel unit 20. For this reason, in the case where relative linear motions do not occur in the X-axis and the Z-axis, the X and Z directional positions of the center 52 of the reference sphere 51 change when the swivel unit 20 rotates -90 degrees. For simultaneous control of the three axes of the B-axis, the Z-axis, and the X-axis, the above-mentioned steps (b1) to (b4) are implemented in the step (a3).

In the step (b1), first, the operator brings the gauge head 62 into contact with the reference sphere 51 with the tool spindle S2 at B-axis 0 degrees around the swivel centerline AX2 (position of the swivel center 21 shown in Fig. 6). In this state, the operator moves the front spindle 10 along the Z direction, and determines the Z-directional position $Z_0$ of the center 52 of the reference sphere 51 in the Z-axis based on the positions of the gauge head 62 that vary depending on the motion of the Z-axis. The Z-directional position $Z_0$ can be obtained by finding the Z-directional position where the reading of the position measuring device 60 becomes minimum while moving the front spindle 10 along the Z direction. The Z-directional position $Z_0$ is an example of the first center position, and can also be called the Z-directional position of the peak of the reference sphere 51 at the part where the gauge head 62 contacts the reference sphere 51 at B-axis 0 degrees.

In the step (b2), first, the operator brings the gauge head 62 into contact with the reference sphere 51 with the tool spindle S2 at B-axis -90 degrees around the swivel centerline AX2. In this state, the operator moves the front spindle 10 along the Z direction, and determines the Z-directional position $Z_{-90}$ of the center 52 of the reference sphere 51 in the Z-axis based on the positions of the gauge head 62 that vary depending on the motion of the Z-axis. The Z-directional position $Z_{-90}$ can be obtained by finding the Z-directional position where the reading of the position measuring device 60 becomes minimum while moving the front spindle 10 in the Z direction. The Z-directional position $Z_{-90}$ is an example of the second center position, and can also be called the Z-directional position of the peak of the reference sphere 51 at the part where the gauge head 62 contacts the reference sphere 51 at B-axis -90 degrees.

In the step (b3), the distance ($^B l_n$) between the swivel center 21 of the swivel unit 20 and the center 52 of the reference sphere 51 is determined based on the Z-directional position $Z_0$ and the Z-directional position $Z_{-90}$. The estimated value $^B l_n$ of the distance between the swivel center 21 and the center 52 of the reference sphere 51 can be calculated as $Z_{-90} - Z_0$. The estimated value $^B l_n$ corresponds to the tool shape offset radius value. For the simultaneous control of the three axes of the B-axis, the Z-axis, and the X-axis, the operator sets the tool shape offset value corresponding to the estimated value $^B l_n$ in the control unit 30.

Although the difference between the first swivel angle and the second swivel angle is preferably 90 degrees, it is possible to calculate the estimated value of the distance between the swivel center 21 and the center 52 of the reference sphere 51 to determine the estimated value even if the difference between the first swivel angle and the second swivel angle is other than 90 degrees.

In the step (b4), based on the tool shape offset value, the control unit 30 causes the Z-axis and the X-axis to perform an arc motion with the distance ($^B l_n$) as a radius so as to keep the gauge head 62 directed toward the center 52 of the reference sphere 51 when the rotation target is the swivel unit 20. This prevents the relative linear motion of the reference sphere in appearance.

After the preparation for the above-mentioned measurement, as exemplified in Figs. 7 to 9, the displacement of the reference sphere 51 is measured over time while the rotation target rotates within the predetermined angular range. First, referring to Fig. 7, an example of measuring X-directional displacement $^C \Delta x$ for applying least squares method to Expressions (6) and (8) will be described. In Fig. 7, the position measuring device 60 at C-axis 0 degrees is shown in solid lines, and the position measuring device 60 at C-axis 90 degrees is shown in two-dot chain lines. The B-axis is set to 0 degrees. The front spindle 10 is controlled to rotate within the predetermined angular range between C-axis 0 degrees and C-axis 90 degrees. First, the front spindle 10 is controlled to rotate from C-axis 0 degrees to C-axis 90 degrees as the first orientation. Then, the front spindle 10 is controlled to rotate from C-axis 90 degrees to C-axis 0 degrees as the second orientation.

When measuring the X-directional displacement $^C \Delta x$, the operator first aligns the Z-directional position of the gauge head 62 with Zo so as to direct the gauge head 62 of the position measuring device 60 at C-axis 0 degrees toward the center 52 of the reference sphere 51. Then, by operating the operation unit 31, the operator measures the positions of the reference sphere 51 with the gauge head 62 while rotating the front spindle 10, which the position measuring device 60 is attached to, from C-axis 0 degrees to C-axis 90 degrees, that is, toward the first orientation. This keeps the gauge head 62 directed toward the center 52 of the reference sphere 51 regardless of the rotation of the front spindle 10. Measurement data of the positions of the reference sphere 51, for example, can be collected at predetermined time intervals with a data logger. This measurement data is, microscopically, a collection of discrete measured values at each time point, but macroscopically, the measurement data can be considered data continuous over time. Since the positions of the reference sphere 51 is measured from C-axis 0 degrees to C-axis 90 degrees, the forward displacement data (denoted as $^C\Delta x_g$) is acquired as a collection of displacement values of the reference sphere 51. Subsequently, the operator measures the positions of the reference sphere 51 with the gauge head 62 while rotating the front spindle 10, which the position measuring device 60 is attached to, from C-axis 90 degrees to C-axis 0 degrees, that is, toward the second orientation. Since the positions of the reference sphere 51 is measured from C-axis 90 degrees to C-axis 0 degrees, the reverse displacement data (denoted as $^C\Delta x_r$) is acquired as a collection of displacement values of the reference sphere 51.

Next, referring to Fig. 8, an example of measuring X-directional displacement $\Delta x$ for applying least squares method to Expression (7) will be described. Fig. 8 schematically shows an example of performing circular interpolation with the Z and X axes and measuring the X-directional displacement of the reference sphere 51 with the gauge head 62, while rotating the swivel unit 20. In Fig. 8, the swivel unit 20 and the position measuring device 60 at B-axis 0 degrees are shown in solid lines, and the swivel unit 20 and the position measuring device 60 at B-axis -90 degrees are shown in two-dot chain lines. The position measuring device 60 is at C-axis 0 degrees, and the direction of the gauge head 62 is along the X-axis. The swivel unit 20 is controlled to rotate within the predetermined angular range between B-axis 0 degrees and B-axis -90 degrees. First, the swivel unit 20 is controlled to rotate from B-axis 0 degrees to B-axis -90 degrees as the first orientation. Then, the swivel unit 20 is controlled to rotate from B-axis -90 degrees to B-axis 0 degrees as the second orientation.

The gauge head 62 of the position measuring device 60 at C-axis 0 degrees is directed toward the center 52 of the reference sphere 51. When measuring the X-directional displacement $\Delta x$, by operating the operation unit 31, the operator first measures the positions of the reference sphere 51 with the gauge head 62 while rotating the swivel unit 20, which the reference sphere 51 is attached to, from B-axis 0 degrees to B-axis -90 degrees as the first orientation. When rotating the swivel unit 20, the control unit 30 simultaneously controls the three axes of the B-axis, the Z-axis, and the X-axis. In the lathe 1 shown in Fig. 1, the Z-directional position of the position measuring device 60 is controlled together with the front spindle 10, and the X-directional position of the swivel unit 20 is controlled together with the rotation angle. This keeps the gauge head 62 directed toward the center 52 of the reference sphere 51 regardless of the rotation of the swivel unit 20, and in appearance, the relative linear motion of the reference sphere 51 does not occur. Since the positions of the reference sphere 51 is measured from B-axis 0 degrees to B-axis -90 degrees, forward displacement data (denoted as $\Delta x_g$) is acquired as the collection of displacement values of the reference sphere 51. Subsequently, the operator measures the positions of the reference sphere 51 with the gauge head 62 while rotating the swivel unit 20, which the reference sphere 51 is attached to, from B-axis -90 degrees to B-axis 0 degrees, that is, toward the second orientation. In this case as well, the control unit 30 simultaneously controls the three axes of the B-axis, the Z-axis, and the X-axis. Since the positions of the reference sphere 51 is measured from B-axis -90 degrees to B-axis 0 degrees, reverse displacement data (denoted as $\Delta x_r$) is acquired as the collection of displacement values of the reference sphere 51.

Furthermore, referring to Fig. 9, an example of measuring the Y-directional displacement $\Delta y$ for applying least squares method to Expression (9) will be described. Fig. 9 schematically shows an example of performing circular interpolation with the Z and X axes and measuring the Y-directional displacement of the reference sphere 51 with the gauge head 62, while rotating the swivel unit 20. Fig. 9 shows the swivel unit 20 at B-axis 0 degrees. The position measuring device 60 is at C-axis 90 degrees, and the direction of the gauge head 62 is along the Y-axis. The swivel unit 20 is, as shown in Fig. 6, controlled to rotate within the predetermined angular range between B-axis 0 degrees and B-axis -90 degrees. First, the swivel unit 20 is controlled to rotate from B-axis 0 degrees to B-axis -90 degrees as the first orientation. Then, the swivel unit 20 is controlled to rotate from B-axis - 90 degrees to B-axis 0 degrees as the second orientation.

The gauge head 62 of the position measuring device 60 at C-axis 90 degrees is directed toward the center 52 of the reference sphere 51. When measuring the Y-directional displacement $\Delta y$, by operating the operation unit 31, the operator first measures the positions of the reference sphere 51 with the gauge head 62 while rotating the swivel unit 20, which the reference sphere 51 is attached to, from B-axis 0 degrees to B-axis -90 degrees as the first orientation. When rotating the swivel unit 20, the control unit 30 simultaneously controls the three axes of the B-axis, the Z-axis, and the X-axis. This keeps the gauge head 62 directed toward the center 52 of the reference sphere 51 regardless of the rotation of the swivel unit 20, and in appearance, the relative linear motion of the reference sphere 51 does not occur. Since the positions of the reference sphere 51 is measured from B-axis 0 degrees to B-axis -90 degrees, forward displacement data (denoted as $\Delta y_g$) is acquired as the collection of displacement values of the reference sphere 51. Subsequently, the operator measures the positions of the reference sphere 51 with the gauge head 62 while rotating the swivel unit 20, which the reference sphere 51 is attached to, from B-axis -90 degrees to B-axis 0 degrees, that is, the second orientation. In this case as well, the control unit 30 simultaneously controls the three axes of the B-axis, the Z-axis, and the X-axis. Since the positions of the reference sphere 51 is measured from B-axis -90 degrees to B-axis 0 degrees, reverse displacement data (denoted as $\Delta y_r$) is acquired as the collection of displacement values of the reference sphere 51.

It should be noted that the predetermined angular range for rotating the rotation target should not be limited to 90 degrees and may be 180 degrees, etc.

Fig. 10 schematically shows an example of a procedure for identifying the geometric errors from C-axis radial displacement data. In the present procedure, the geometric errors will be identified from the measurement of the X-directional displacement $^C\Delta x$ shown in Fig. 7. Steps S10 and S12 shown in Fig. 10 correspond to the above-mentioned step (a3), and steps S14 and S16 shown in Fig. 10 correspond to the above-mentioned step (a4). Steps S10 and S12 can be implemented by causing the lathe 1 to execute a machining program for realizing the following operations.

First, C-axis radial forward displacement data $^C\Delta x_g$ is acquired by measuring the positions of the reference sphere 51 while rotating the front spindle 10 from C-axis 0 degrees to C-axis 90 degrees (Step S10). Next, C-axis radial reverse displacement data $^C\Delta x_r$ is acquired by measuring the positions of the reference sphere 51 while rotating the front spindle 10 from C-axis 90 degrees to C-axis 0 degrees (Step S12).

Then, displacement data $^C\Delta x$ is acquired by averaging the forward displacement data $^C\Delta x_g$ and the reverse displacement data $^C\Delta x_r$ (Step S14). This prevents the influence of the displacement due to difference in directions of the motion of the front spindle 10, the influence being caused by backlash and frictional force existing in the drive mechanism.

Finally, the geometric errors are identified by determining the coefficients through least squares method using Expression (6) and the displacement data $^C\Delta x$ (Step S16). Consequently, the geometric error $\delta_{yB(S2)}$, which is the coefficient of sin in Expression (6), is identified.

Fig. 11 schematically shows an example of a procedure for identifying the geometric errors from displacement data during simultaneous control of the B, Z and X axes. In the present procedure, the geometric errors will be identified from the measurement of the X-directional displacement $\Delta x$ shown in Fig. 8. Steps S20 and S22 shown in Fig. 11 correspond to the above-mentioned step (a3), and steps S24 and S26 shown in Fig. 11 correspond to the above-mentioned step (a4). Steps S20 and S22 can be implemented by causing the lathe 1 to execute a machining program for realizing the following operations.

First, forward displacement data $\Delta x_g$ is acquired while rotating the swivel unit 20 from B-axis 0 degrees to B-axis -90 degrees (Step S20). During this B-axis rotation, the control unit 30 simultaneously controls the three axes of the B-axis, the Z-axis, and the X-axis so as to keep the gauge head 62 directed toward the center 52 of the reference sphere 51 regardless of the rotation of the swivel unit 20. Next, reverse displacement data $\Delta x_r$ is acquired while rotating the swivel unit 20 from B-axis -90 degrees to B-axis 0 degrees (Step S22).

Then, displacement data $\Delta x$ is acquired by averaging the forward displacement data $\Delta x_g$ and the reverse displacement data $\Delta x_r$ (Step S24). This prevents the influence of the displacement due to difference in directions of the motion of the swivel unit 20, the influence being caused by backlash and frictional force existing in the drive mechanism.

Finally, the geometric errors are identified by determining the coefficients through least squares method using Expression (7) and the displacement data $\Delta x$ (Step S26). Consequently, the geometric error $(^bl_r-^bl_n)$, which is the coefficient of cos in Expression (7), is identified. In addition, the geometric error $\delta_{xYB}$ included in the coefficient of cos in Expression (8), which is the same as Expression (6), is identified because the geometric error $(^bl_r-^bl_n)$ has been identified from Expression (7) described above.

As described above, by using multiple mathematical expressions, more geometric errors can be identified.

Herein, the measurement condition shown in Steps S10 and S12 of Fig. 10 and in Fig. 7 exemplifies the first measurement condition, and the displacement data $^C\Delta x$ to be acquired exemplifies the first displacement data. Steps S10 and S12 of Fig. 10 can be called a step of acquiring the first displacement data by measuring the positions of the reference sphere 51 under the first measurement condition while rotating the rotation target. The measurement condition shown in Steps S20 and S22 of Fig. 11 and in Fig. 8 exemplifies the second measurement condition, and the displacement data $\Delta x$ to be acquired exemplifies the second displacement data. Steps S20 and S22 of Fig. 11 can be called a step of acquiring the second displacement data by measuring the positions of the reference sphere 51 under the second measurement conditions while rotating the rotation target.

Furthermore, Expressions (6) and (8) described above exemplifies the first mathematical expression having the first coefficient representing the geometric errors, and Expression (7) described above exemplifies the second mathematical expression having the second coefficient representing the geometric errors. Steps S14 and S16 of Fig. 10 can be called a step of determining the first coefficient through least squares method using the first mathematical expression and the first displacement data. Steps S24 and S26 of Fig. 11 can be called a step of determining the second coefficient through least squares method using the second mathematical expression and the second displacement data. By determining both of the first coefficient and the second coefficient, more geometric errors can be identified.

The procedure for identifying the geometric errors from displacement data during simultaneous control of the B, Z and X axes, by using Expression (9) representing the Y-directional displacement $\Delta y$, is similar to that shown in Fig. 11. In the procedure using Expression (9), the geometric errors is identified from the measurement of the Y-directional displacement $\Delta y$ shown in Fig. 9.

First, forward displacement data $\Delta y_g$ is acquired while rotating the swivel unit 20 from B-axis 0 degrees to B-axis -90 degrees (corresponding to Step S20). During this B-axis rotation, the control unit 30 simultaneously controls the three axes of the B-axis, the Z-axis, and the X-axis so as to keep the gauge head 62 directed toward the center 52 of the reference sphere 51 regardless of the rotation of the swivel unit 20. Next, reverse displacement data $\Delta y_r$ is acquired while rotating the swivel unit 20 from B-axis -90 degrees to B-axis 0 degrees (corresponding to Step S22). Then, displacement data $\Delta y$ is acquired by averaging the forward displacement data $\Delta y_g$ and the reverse displacement data $\Delta y_r$ (corresponding to Step S24). Finally, the geometric errors are identified by determining the coefficients through least squares method using Expression (9) and the displacement data $\Delta y$ (corresponding to Step S26). Since the tool length $^b l_n$ is known, the geometric error $\alpha_{YB}$ included in the coefficient of sin in Expression (9) is identified, and the geometric error $\gamma_{YB}$ included in the coefficient of cos in Expression (9) is identified.

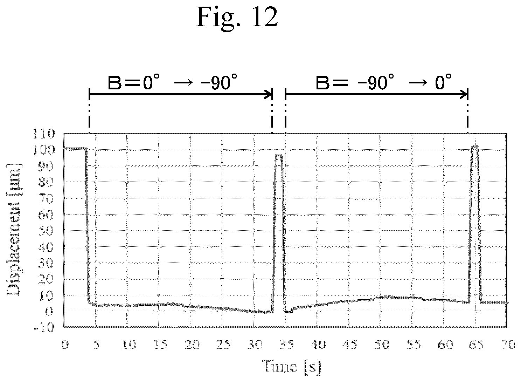

Fig. 12 shows, as an example, the measurement results of the forward displacement data $\Delta x_g$ and the reverse displacement data $\Delta x_r$ during the simultaneous control of the B, Z and X axes shown in Steps S20 and S22 of Fig. 11 and in Fig. 8. In Fig. 12, the horizontal axis represents time and the vertical axis represents displacement.

In order to clearly define both of start and end points for each of the forward motion and the reverse motion, extra motions of the swivel unit 20 along the X-axis is added. Specific work was done as follows: The X-directional position of the swivel unit 20 was set to +0.1mm before the start of the forward motion. First, the swivel unit 20 was moved -0.1mm in the X direction and stopped for 1 second. Next, while rotating the B-axis from 0 degrees to -90 degrees at a rotational speed of 200 deg/min, circular interpolation motion was performed with the Z and X axes. Then, the swivel unit 20 was stopped for 1 second at B-axis -90 degrees, and was moved +0.1mm in the X direction. Then, the swivel unit 20 was moved -0.1mm in the X direction, and was stopped for 1 second. Then, while rotating the B-axis from -90 degrees to 0 degrees at a rotational speed of 200 deg/min, circular interpolation motion was performed with the Z and X axes. Then, the swivel unit 20 was stopped for 1 second at B-axis 0 degrees. Finally, the swivel unit 20 was moved +0.1mm in the X direction.

For the position measuring device 60, Mitutoyo's electric micrometer MCH-331 (measurement range: ±0.5mm) was used. For the reference sphere 51, Renishaw A-8014-0141-07 Center Ball Ballbar Center Bar Assembly (ball diameter: 12.7mm) was used.

As shown in Fig. 12, it is due to the existence of the geometric errors between the axes that displacement varies during the B-axis rotation.

By identifying the geometric errors by the above-described method and modifying the parameters of the control unit 30 based on these geometric errors, the variation in the displacement during the B-axis rotation can be reduced.

As described above, since the reference sphere 51 is positioned on the tool spindle S2, it is possible to reduce the movement of the reference sphere 51 compared to when the reference sphere 51 is positioned offset from the rotation centerline AX1. This reduces a space for the measurement, and enables the measurement even if the position measuring device 60 cannot be attached to the tool spindle S2. Since the aforementioned the position measuring device 60 is attached to the front spindle 10, it is easy to handle wiring and the like. Then, the geometric errors are accurately identified by least squares method using the displacement data to be acquired and the mathematical expressions derived from the mathematical model. Therefore, it is possible to easily identify the geometric errors between the axes in the machine tool such as the spindle-moving lathe etc., the machine tool having the limited movable range.

Moreover, by deriving mathematical expressions different from the Expressions (6) to (9) described above based on the mathematical model and acquiring displacement data under measurement conditions corresponding to the mathematical expressions, it is possible to identify more numbers of the geometric errors.

(5) Modified Examples

In the above-described examples, the second tool spindle S2 from the bottom among the tool spindles in the swivel unit 20 has been described. Of course, it is possible to identify the geometric errors in the same way for the remaining tool spindles.

In the above-described examples, the front spindle 10 has been described as the rotation unit. Of course, the rotation unit may be the back spindle 12.

Machine tools applicable to the above-described method for identifying the geometric errors should not be limited to spindle-moving lathes, and may be spindle-fixed lathes having a front spindle that does not move along its spindle centerline, or the like.

(6) Conclusion

As described above, according to the present invention, it is possible to provide the method for easily identifying the geometric errors between the axes in the machine tool having the limited movable range, and the like, in various embodiments. Of course, configurations consisting of the components in each independent claim can produce the above-mentioned primary operation and effect.

It is also possible to implement configurations formed by exchanging or combining the components disclosed in the above-mentioned examples with each another, configurations formed by exchanging or combining components in related art and the components disclosed in the above-mentioned examples with each another, etc. The present invention implies these configurations and the like.

Finally, names corresponding to reference signs are listed as follows:

1...lathe (example of machine tool),

10...front spindle (example of rotation unit), 11...guide bush, 15...gang tool post,

20...swivel unit, 21...swivel center,

30...control unit, 31...operation unit,

50...tool-side jig, 51...reference sphere, 52...center,

60...position measuring device, 61...device body, 62...gauge head, 63...workpiece-side jig,

AX1...rotation centerline, AX2...swivel centerline, AX3...tool spindle centerline,

S1 and S2...tool spindle,

TO1...tool, W1...workpiece.

**Claims**

1.  A method for identifying geometric errors between axes from a workpiece to a tool spindle in a machine tool including a rotation unit, a swivel unit having a tool spindle, and a control unit, the rotation unit being configured to rotate together with the workpiece around a rotation centerline, the swivel unit being configured to swivel around a swivel centerline whose direction is different from that of the tool spindle, the control unit being configured to control motions of a rotation axis around the rotation centerline, a swivel axis around the swivel centerline, and linear axes, the method comprising the steps of:

    (a1) positioning a reference sphere having a center so as to align the center with a centerline of the tool spindle;
    (a2) attaching a position measuring device having a gauge head to the rotation unit so as to direct the gauge head toward the rotation centerline;
    (a3) acquiring displacement data relative to the center of the reference sphere by measuring positions of the reference sphere with the gauge head while rotating a rotation target with the gauge head directed toward the center of the reference sphere, the displacement data being dependent on rotation angles of the rotation target, the rotation target being either the swivel unit or the rotation unit; and
    (a4) identifying the geometric errors by least squares method using a mathematical expression and the displacement data, the mathematical expression having terms containing the geometric errors and representing displacement dependent on the rotation angles.

2.  The method for identifying geometric errors according to claim 1, wherein
    in the step (a3), at least one of the linear axes is controlled so as to keep the gauge head directed toward the center of the reference sphere regardless of rotation of the rotation target.

3.  The method for identifying geometric errors according to claim 2, wherein

    the linear axes include a first linear axis along the rotation centerline and a second linear axis whose direction is different from both that of the rotation centerline and that of the swivel centerline,
    the step (a3) includes the steps of:

    (b1) bringing the gauge head into contact with the reference sphere with the tool spindle at a first swivel angle around the swivel centerline, and determining a first center position of the reference sphere in the first linear axis based on positions of the gauge head that vary depending on the motion of the first linear axis;
    (b2) bringing the gauge head into contact with the reference sphere with the tool spindle at a second swivel angle different from the first swivel angle around the swivel centerline, and determining a second center position of the reference sphere in the first linear axis based on positions of the gauge head that vary depending on the motion of the first linear axis;

(b3) determining a distance between a swivel center of the swivel unit and the center of the reference sphere based on the first center position and the second center position; and

(b4) causing the first linear axis and the second linear axis to perform an arc motion with the distance as a radius so as to keep the gauge head directed toward the center of the reference sphere when the rotation target is the swivel unit.

4. The method for identifying geometric errors according to claim 3, wherein

the first linear axis is a Z-axis,
the second linear axis is an X-axis,
the tool spindle at the first swivel angle is oriented along the X-axis, and
the tool spindle at the second swivel angle is oriented along the Z-axis.

5. The method for identifying geometric errors according to any one of claims 1 to 4, wherein
in the step (a3), the displacement data is acquired by measuring positions of the reference sphere with the gauge head while rotating the rotation target within a predetermined angular range of 180 degrees or less.

6. The method for identifying geometric errors according to claim 5, wherein

in the step (a3), forward displacement data as the displacement data is acquired by measuring positions of the reference sphere with the gauge head while rotating the rotation target toward a first orientation within the predetermined angular range, and reverse displacement data as the displacement data is acquired by measuring positions of the reference sphere with the gauge head while rotating the rotation target toward a second orientation opposite to the first orientation within the predetermined angular range, and

in the step (a4), the geometric errors are identified by least squares method using an average of the forward displacement data and the reverse displacement data.

7. The method for identifying geometric errors according to any one of claims 1 to 4, wherein

in the step (a3), first displacement data as the displacement data is acquired by measuring positions of the reference sphere under a first measurement condition while rotating the rotation target, and second displacement data as the displacement data is acquired by measuring positions of the reference sphere under a second measurement condition different from the first measurement condition while rotating the rotation target, and

in the step (a4), the geometric errors are identified by determining a first coefficient representing the geometric errors through least squares method using a first mathematical expression having the first coefficient and the first displacement data, and determining a second coefficient representing the geometric errors through least squares method using a second mathematical expression having the second coefficient and the second displacement data.

8. The method for identifying geometric errors according to any one of claims 1 to 3, wherein

the linear axes include an X-axis, a Y-axis, and a Z-axis,
the Y-axis is oriented along the swivel centerline,
the Z-axis is oriented along the rotation centerline,
the rotation unit is a spindle capable of gripping the workpiece and movable along the rotation centerline, and
the swivel unit is a B-axis unit where a tool for machining the workpiece is configured to be mounted along the tool spindle.

Fig. 1

# Fig. 2

# Fig. 3

# Fig. 4

# Fig. 5

# Fig. 6

# Fig. 7

# Fig. 8

# Fig. 9

# Fig. 10

acquire C-axis radial forward displacement data $^C\Delta x_g$ while rotating C-axis from 0° to 90° — S10

acquire C-axis radial reverse displacement data $^C\Delta x_r$ while rotating C-axis from 90° to 0° — S12

acquire average displacement data $^C\Delta x$ — S14

identify geometric errors by least squares method using mathematical expression and displacement data $^C\Delta x$ — S16

# Fig. 11

acquire forward displacement data $\Delta x_g$ while rotating B-axis from 0° to -90° and performing circular interpolation with Z and X axes — S20

acquire reverse displacement data $\Delta x_r$ while rotating B-axis from -90° to 0° and performing circular interpolation with Z and X axes — S22

acquire average displacement data $\Delta x$ — S24

identify geometric errors by least squares method using mathematical expression and displacement data $\Delta x$ — S26

Fig. 12

Europäisches
Patentamt

European
Patent Office

Office européen
des brevets

# EUROPEAN SEARCH REPORT

**Application Number**

EP 25 15 2232

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LI JIE ET AL: "A geometric error identification method for the swiveling axes of five-axis machine tools by static R-test", THE INTERNATIONAL JOURNAL OF ADVANCED MANUFACTURING TECHNOLOGY, SPRINGER, LONDON, vol. 89, no. 9, 20 August 2016 (2016-08-20), pages 3393-3405, XP036198401, ISSN: 0268-3768, DOI: 10.1007/S00170-016-9199-7 [retrieved on 2016-08-20] | 1,2,5-8 | INV. G05B19/401 B23Q17/22 G01B21/04 G05B19/404 |
| A | * abstract * <br> * figures 2-9 * <br> * sections 2-4 * | 3,4 | |
| | ----- | | |
| X | US 2009/183610 A1 (MAXTED PAUL [GB] ET AL) 23 July 2009 (2009-07-23) | 1,2,5-8 | |
| A | * abstract * <br> * figures 1-6,15 * <br> * paragraph [0017] - paragraph [0058] * <br> * paragraph [0097] - paragraph [0119] * <br> * paragraph [0183] - paragraph [0208] * | 3,4 | **TECHNICAL FIELDS SEARCHED (IPC)** G05B B23Q G01B |
| | ----- | | |
| | -/-- | | |

The present search report has been drawn up for all claims

| Place of search | Date of completion of the search | Examiner |
|---|---|---|
| The Hague | 19 June 2025 | Kielhöfer, Patrick |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

**Application Number**

EP 25 15 2232

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YANG SEUNG-HAN ET AL: "Machine tool analyzer: a device for identifying 13 position-independent geometric errors for five-axis machine tools", THE INTERNATIONAL JOURNAL OF ADVANCED MANUFACTURING TECHNOLOGY, SPRINGER, LONDON, vol. 115, no. 9-10, 31 May 2021 (2021-05-31), pages 2945-2957, XP037513048, ISSN: 0268-3768, DOI: 10.1007/S00170-021-07341-7 [retrieved on 2021-05-31] | 1,2,5-8 | |
| A | * abstract * * sections 2, 3 * | 3,4 | |
| | ----- | | |
| | | | **TECHNICAL FIELDS SEARCHED (IPC)** |

The present search report has been drawn up for all claims

| Place of search | Date of completion of the search | Examiner |
|---|---|---|
| The Hague | 19 June 2025 | Kielhöfer, Patrick |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 15 2232

This annex lists the patent family members relating to the patent documents cited in the above-mentioned European search report.
The members are as contained in the European Patent Office EDP file on
The European Patent Office is in no way liable for these particulars which are merely given for the purpose of information.

19-06-2025

| Patent document cited in search report | | Publication date | Patent family member(s) | | Publication date |
|---|---|---|---|---|---|
| US 2009183610 | A1 | 23-07-2009 | CN | 101331436 A | 24-12-2008 |
| | | | CN | 101976056 A | 16-02-2011 |
| | | | CN | 101976057 A | 16-02-2011 |
| | | | EP | 1963936 A1 | 03-09-2008 |
| | | | EP | 2287687 A2 | 23-02-2011 |
| | | | EP | 2287688 A1 | 23-02-2011 |
| | | | JP | 5836314 B2 | 24-12-2015 |
| | | | JP | 2009519137 A | 14-05-2009 |
| | | | JP | 2013176839 A | 09-09-2013 |
| | | | TW | I416290 B | 21-11-2013 |
| | | | US | 2009183610 A1 | 23-07-2009 |
| | | | US | 2013139660 A1 | 06-06-2013 |
| | | | WO | 2007068912 A1 | 21-06-2007 |

EPO FORM P0459

For more details about this annex : see Official Journal of the European Patent Office, No. 12/82

**EP 4 610 751 A1**

**Patent documents cited in the description**

- JP 2024027147 A
- JP 2018142064 A